# EUROPEAN PATENT SPECIFICATION

(11) **EP 2 878 585 B1**
(45) Date of publication and mention of the grant of the patent: **31.05.2017**
(21) Application number: 13382474.8
(22) Date of filing: 27.11.2013
(51) Int. Cl.: C04B 22/00, C04B 18/02

(54) **Method for the manufacturing of cementitious C-S-H seeds**
Verfahren zur Herstellung von zementartigen C-S-H-Samen
Procédé pour la fabrication de germes C-S-H cimentaires

(43) Date of publication of application: 03.06.2015
(73) Proprietor: Fundacíon Tecnalia Research & Innovation, 48160 Derio (Bizkaia) (ES)
(72) Inventor: GAITERO REDONDO, Juan José, 48160 Derio (Bizkaia) (ES); SÁNCHEZ DOLADO, Jorge, 48160 Derio (Bizkaia) (ES)
(74) Representative: ZBM Patents - Zea, Barlocci & Markvardsen

(56) References cited:
- US-A- 3 052 563
- K Baltakys: "Influence of gypsum additive on the formation of calcium silicate hydrates in mixtures with C/S = 0.83 or 1.0", Materials Science-Poland, 1 January 2009 (2009-01-01), XP055114482, Retrieved from the Internet: URL:http://www.materialsscience.pwr.wroc.p l/bi/vol27no4/articles/ms_16_2008_426balt. pdf [retrieved on 2014-04-17]
- R.P.H. Chang et al.: "Materials Science and Engineering Serving Society", 25 December 1998 (1998-12-25), Elsevier, Amsterdam, XP002723424, ISBN: 0-08-053587-9 pages 86-87, * the whole document *
- M Hubler ET AL: "Influence of Nucleation Seeding on the Compressive Strength of Ordinary Portland Cement and Alkali Activated Blast---Furnace Slag INFLUENCE OF NUCLEATION SEEDING ON THE COMPRESSIVE STRENGTH OF ORDINARY PORTLAND CEMENT AND ALKALI ACTIVATED BLAST-FURNACE SLAG", , 31 December 2009 (2009-12-31), XP055114481, Retrieved from the Internet: URL:http://www.iti.northwestern.edu/public ations/utc/safetea-lu/FR-3-Jennings-Thomas .pdf [retrieved on 2014-04-17]
- YONGJIA HE ET AL: "Effect of C/S ratio on morphology and structure of hydrothermally synthesized calcium silicate hydrate", JOURNAL OF WUHAN UNIVERSITY OF TECHNOLOGY-MATER. SCI. ED. ; MATERIALS SCIENCE EDITION, WUHAN UNIVERSITY OF TECHNOLOGY, HEIDELBERG, vol. 26, no. 4, 26 July 2011 (2011-07-26), pages 770-773, XP019930676, ISSN: 1993-0437, DOI: 10.1007/S11595-011-0308-Z

## Description

### FIELD OF THE INVENTION

The present invention is related to Supplementary cementitious materials (SCMs) which are mineral admixtures consisting of powdered or pulverized materials to be added to concrete before or during mixing to improve or change hardening properties of Portland cement concrete. More particularly the present invention relates to a new process for the manufacturing of Calcium-Silicate-Hydrate (C-S-H) seeds, to said C-S-H seeds and to their use as hardening accelerant for example in concrete or other cement based materials.

### BACKGROUND OF THE INVENTION

Supplementary cementitious materials (SCMs) are a class of mineral-based materials which possesses pozzolanic capacity or latent hydraulic reactivity or both. Different SCMs can be found in real concrete mixes. Fly-ash (FA) is very likely among the most promising SCMs. It is a byproduct of the coal industry which can substitute cement clinker in big proportions (up to 50% in weight) and is very competitive in term of price (less than half of the price of cement). Its main drawback lies on its low latent hydraulic capacity, something which translates into poor early mechanical properties. Slag (a waste of steel industry) has much better hydraulic capacity than FA (only slightly slower than pure cement clinker) but a much higher cost (approx. 80% the price of cement). Silica Fume (SF) and natural puzzolans such as calcined shale, calcined clay or metakaolin, exhibit the so called puzzolanic capacity; namely the ability of reacting with Portlandite (CH) to give cementitiuos Calcium-Silicate-Hydrate (C-S-H). The most common natural pozzolans used today are processed materials, which are heat treated in a kiln and then ground to a fine powder. With a price slightly higher than cement (about 100-150 €/tone) they can be used as a partial replacement for the cement, typically in the range of 5% to 35%, and to enhance resistance to sulfate attack, control alkali-silica reactivity, and reduce permeability. Thanks to their small size (average diameter about 0.1 µm), the Silica Fume (SF), also known as condensed silica, exhibits a large puzzolanic capacity. It is well established that substitution between 5% and 10% of cement by SF particles improves the compressive strength of concrete at 28 days and it is used in special applications where a high degree of impermeability is needed and in high strength concrete. Regular use is not possible due to its price (about 250 €/ton).

The interaction of the nanosilica particles (NS) with Portland cement was first studied by S. Chandra and H. Bergqvist; Proc. Int. Congr. Chem. Cem. Vol. 3 (3ii106, 6pp, (1997), who showed that the addition of colloidal nanosilica is enough to produce the same pozzolanic effect (capacity of the silica particle to react with CH to yield C-S-H) as with higher quantities of SF. These properties were attributed to the fineness of NS particles (the specific surface of silica fume was 15-25 m²g⁻¹, whereas the NS used by the authors had a specific area of 80 m²g⁻¹). Afterwards, intensive worldwide research proved (experimental and computationally) that, apart from the NS pozzolanic reactions, the use of NS particles implies an additional mechanism for the growth of silicate chains in C-S-H gel. This new mechanism involves reactions of the type "NS + C-S-H →C-S-H (new)", in which the new C-S-H gel has longer and more stable chains. While the use of minor amounts of NS particles largely improves the mechanical properties of concrete, the practical use is limited because of their high price (about 2500 €/ton). The same problem with the prices exists for a new recently proposed family of nano-additions which instead of acting through a puzzolanic mechanism they acts as templates which favor nucleation.

A recent experimental work (Thomas et. Al.; J. Phys. Chem. C 2009, 113, 4327-4334) has demonstrated that the addition of C-S-H nanoparticles into Ordinary Portland Cements (OPC) exhibits a seeding effect whereby the C-S-H addition provides new nucleation sites within the pore space away from the particle surfaces. The same mechanism was afterwards described to occur in other cement varieties (Hubler et al., Cement and Concrete Research 41, (2011) 842-846). The kinetic of the hydration process can therefore be tuned by playing with the amount of C-S-H nanoparticles added. This simple idea, which is easily understood by conventional nucleation and growth models, was well received by the oil and gas sector, where a fine control of the oil-cement setting is crucial. Nevertheless, the synthesis of C-S-H nanoparticles is a quite troublesome process. Traditional approaches for synthesizing C-S-H particles, based on sol-gel routes are hardly scalable.

While the use of SCMs is becoming a clear trend for cement industry, the use in practice is limited by price and technical reasons. While the use of reactive SCMs increases the price of cement clinker, the content of cheap but not very reactive varieties like FAs cannot be raised because they could jeopardize the initial strength properties.

Alternative methods based on wastes to produced dried Calcium Silicate Hydrates have likewise been reported [CN102838301, JP2008037701], but either they need of heat treatments [burning and cooling down steps [CN102838301]] or the emphasis is paid into the thermal efficiency of the produced C-S-H and not into their hardening process. In this context, it is worth noting that JP2008037701 is based on a regular hydrothermal treatment of wastes containing CaO (scallops) and SiO2 (glass waste) to produce Calcium Silicate Hydrates

Some previous attempts to exploit the nucleation ability of C-S-H seeds [WO2011/131378, WO2012/085508 and WO2010/026155] have resorted to polymeric suspensions of C-S-H hardeners. The combination of polymers and C-S-H seeds is appealing from a technical point of view, but it complicates the synthesis. While efficient for thermal insulation aspects these Calcium Silicate Hydrate products are stated in WO2010/026155 to have little effect as hardening accelerators. To overcome this shortcoming WO2010/026155 proposes the use of polymeric suspensions of defected calcium silicate hydrate hardeners. In fact, it proposes the employment of aluminium salts and/or magnesium salts so that defects in the calcium silicate hydrate can be created via the introduction of ions different to calcium and silicon.

K. Baltakys and colleagues (Baltakys K. et al., : "Influence of gypsum additive on the formation of calcium silicate hydrates in mixtures with CIS =0.83 or 1.0", Materials Science-Poland (2009-01-01)) disclose a process for the manufacturing of C-S-H comprising: (a) selecting one or more starting materials comprising Ca and Si, (b) mixing said starting material with at least one doping agent, (c) combining the obtained mixture in (b) with water, and (d) subjecting the said resulting mixture to hydrothermal treatment.

In view of the above, there is still the need in the state of the art of providing an alternative, simple and industrially scalable process for the manufacturing C-S-H seeds which are cheap and reactive, and thus useful as hardening accelerator for concrete or other cement based materials.

### BRIEF DESCRIPTION OF THE FIGURES

Fig. 1, shows the XRD spectra of a sample without doping element (upper panel) and of a sample with B as doping element (bottom panel).
Fig. 2, shows the XRD spectra of a sample without doping element (upper panel) and of a sample with P as doping element (bottom panel).
Fig. 3, shows the raise of the compressive strength (ΔR (%)) achieved by the use of different SCMs: **NS:** nanosilica, **NA:** nanoalumina; **MS:** microsilica and **S:** C-H-S seeds according to the invention.

### DESCRIPTION OF THE INVENTION

It is well known that regular hydrothermal treatments of wastes like FAs in a calcium rich environment yield hydrated products like α-C2SH and katoite (Guerrero et. al., J. Am. Ceram. Soc., 88 [7] 1845-1853 (2005)). α-C2SH however belongs to the family of crystalline Calcium Silicate Hydrates, and its atomic structure largely differs from the structure of cementitious C-S-H gel.

The present invention is based on the discovery by the present inventors that it is possible to obtain reactive Calcium Silicate Hydrates (CSH) seeds through a hydrothermal treatment of industrial wastes or industrial by-products, in the presence of minor amounts of doping agents containing as doping elements one or more of B, P and S. Low cost and reactive, new C-S-H seeds are obtainable according to the present invention. The presence of at least one or more of these doping elements during the hydrothermal treatment triggers the appearance of tobermorite-like nano-crystallites (i.e. stabilizes the presence of defected tobermorite phases in detriment of α-C2SH). These structures are known to be good structural models of cementitious C-S-H (Cong, X., et. al., Adv. Cem. Based Mater. 1996, 3, 144; Dolado, J. S., et. al., J. Am. Cer. Soc., 2007, 90, 3938), and in consequence, they are appropriate templates for increasing the cementitious C-S-H nucleation and growth.

Thus the present invention relates in one aspect to a process for the manufacturing of C-S-H seeds, hereinafter referred to as the process of the invention which comprises the following steps:
(i) selecting one or more starting materials from industrial wastes and byproducts comprising Ca and Si, wherein the industrial wastes and by-products are selected from the group consisting of fly ash, silica fume, ground granulated blast furnace slag, salt slag and acetylene lime slurry
(ii) mixing said starting materials with at least one doping agent selected from the group of salts and oxides containing one or more of the doping elements selected from the group consisting of B, P and mixtures thereof comprising one or more doping elements selected from the group of P, B and their mixtures, in such a proportion that the molar ratio Ca : (Si + doping element) in the mixture ranges between 0.5 and 2.5 and the molar ratio of doping element: silicon is in the range of 0.01 to 0.5;
(iii) Combining the obtained mixture in (ii) with water so that the solid-water ratio by weight in the resulting mixture is equal to or larger than 0.2, and
(iv) subjecting the said resulting mixture to hydrothermal treatment at a temperature comprised between 25 and 350 ºC and a pressure that is endogenous or is kept constant between 0.1 MPa and 50 MPa.

According to another particular embodiment the industrial waste or by-product material is a combination of FA and acetylene lime slurry.

When FA is used as starting material, which comprises an intrinsic aluminium content, it has been observed that said content guarantees a sufficient amount of defects in the obtained C-S-H seeds, so as to further promote their hardening accelerator and seeding capacity.

Non limiting examples of doping agents are pyridine-3-trihydroxyborate (C₅H₇BNNaO₃), Borax in any hydratation state, such as Na₂B₄O₇·10H₂O, phosphorus pentaoxide (P₂O₅), phosphoric acid (H₃PO₄), sodium sulphate (NaSO₄), or potassium sulfate (K₂SO₄).

According to a particular embodiment the doping agent is borax, in any of its hydration states, preferably Na₂B₄O₇·10H₂O. According to another particular embodiment of the invention the doping agent is P₂O₅.

The amount of the doping agent added in step (ii) is such that the molar ratio of doping element to silicon is in the range of 0.01 to 0.5, preferably from 0.02 to 0.10. This amount can readily be calculated by the skilled person in the art, as well as the starting material/s and their amounts to achieve the molar ratio defined in step (ii).

The process can be carried out in any conventional device, such as an autoclave. To the mixture obtained in step (ii) water is added so that the solid-water ratio by weight in the resulting mixture is equal to or larger than 0.2. This amount of water is such that the full hydratation of the solid elements is achieved. The resulting aqueous mixture is then subjected to a hydrothermal treatment. According to a particular embodiment the temperature is comprised between 75 to 250 °C. According to another particular embodiment the temperature is 200 °C.

The pressure during the hydrothermal treatment is endogenous (the one self-generated during the treatment at the selected temperature), or is kept constant. According to another particular embodiment the pressure is endogenous.

The process according to a particular embodiment is carried out under stirring to prevent decantation of the solids.

The treatment can last from minutes to hours depending on the specific starting materials, the doping agent, the pressure, or the temperature. Typically the treatment time may broadly vary between 30 minutes to 48 hours. According to a particular embodiment, it varies between 2 to 6 hours.

The process of the invention can further comprise the following steps after the hydrothermal treatment. Generally the obtained product is cooled down, the resulting slurry is filtered, and dried at a temperature equal or below 125°C. Said dried product can then be disagglomerated to render the C-S-H seeds of the present invention in form of a powder.

The obtained C-S-H seeds according to the process of the invention are also an object of the present invention.

After the optional step of disagglomeration, the C-S-H seeds are in the form of a fine powder whose average grain diameter is typically below 15 µm and its Blaine values are typically larger than 1200 m²/kg.

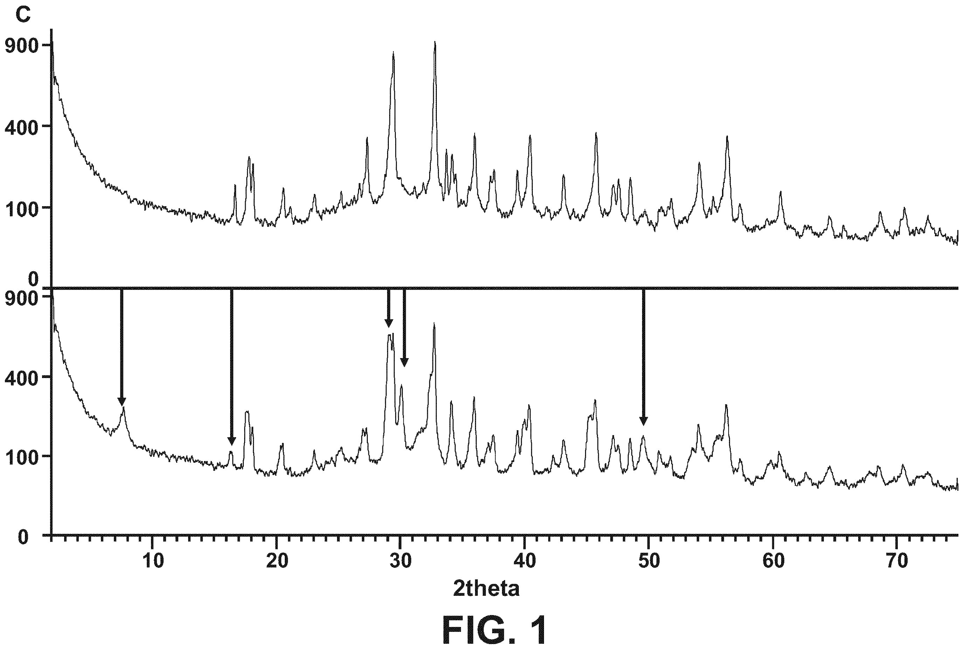

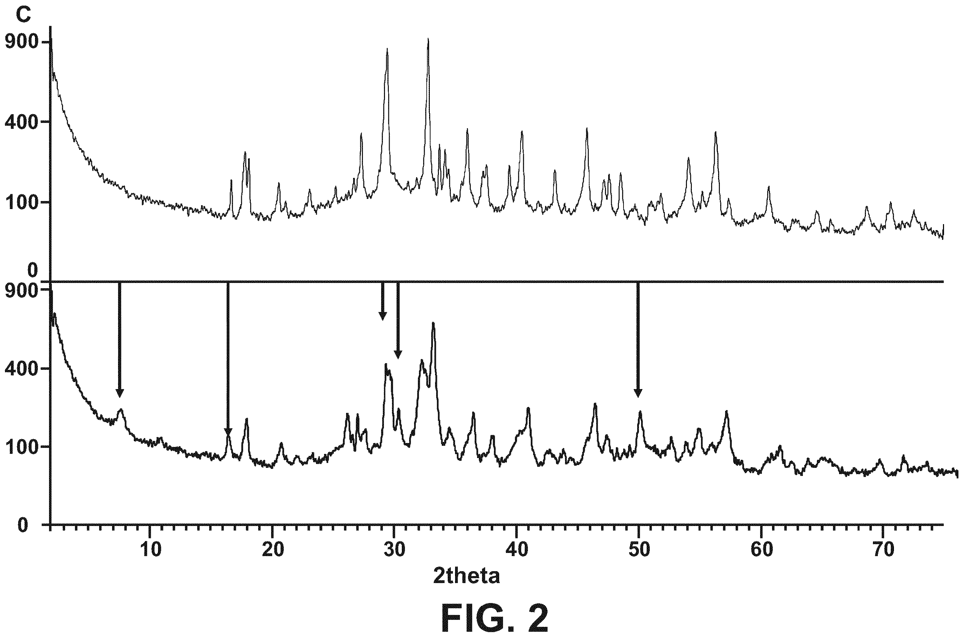

The C-S-H seeds of the invention are characterized in that they present one or more of the doping elements B, S and P used in the process of the invention. Furthermore, they present tobermorite-like nano-crystallites. This structure is shown in the bottom panels of Figures 1 and 2.

The effect of the doping elements in the appearance of the C-S-H seeds is displayed in Fig. 1, where the XRD spectra of samples without and with doping elements are presented. In particular, Fig. 1 corresponds to the case of the XRD pattern of the product resulting from an hydrothermal treatment of Fly Ash (FA) and acetylene lime slurry at 200ºC with endogenous pressure for 4 hours, where no doping elements were included (upper panel) and where a 7% by weight of Borax (Na₂B₄O₇·10H₂O) is included (bottom panel). As can be seen the undoped formulation (upper panel) does not give any signal at 2Theta = 8° while this signal is clearly present for the formulation doped with Borax. This peak is the so-called basal peak, and is a clear hallmark for the presence of tobermorite-like features. Other important C-S-H peaks are likewise shown by arrows at 2Theta: 17º, 29º, 31º and 50º.

As a second example the effect of phosphorus as doping agent is shown in Fig. 2. In particular, in Fig 2 it is shown the XRD of the product resulting from a 6 hours long hydrothermal treatment of Fly Ashes and acetylene lime slurry at 200ºC and endogenous pressure without doping agents (upper panel) and with phosphorus as doping element (bottom panel). In particular, the doped sample analyzed in Figure 2 was produced by including a 10% by weight of P₂O₅. As can be seen, the seeds doped with P₂O₅ present the peaks ascribed to tobermorite-like nano-crystallites, very similar to the cementitious C-S-H gel (shown by arrows) whereas the sample without doping agents does not.

The C-H-S seeds of the invention, which structure is very similar to the cementitious C-S-H gel are appropriate templates for increasing the cementitious C-S-H nucleation and growth. Thus, they present seeding capacity and hardening accelerator properties, when used as additives in concrete or other cement based materials.

In another aspect the present invention relates to an additive composition for concrete or other cement based material, comprising the C-S-H seeds of the present invention.

In a further aspect the invention relates to the use of the C-S-H seeds of the invention or to the use of the additive composition of the invention as hardening accelerator and seeding additive for concrete or other cement based materials.

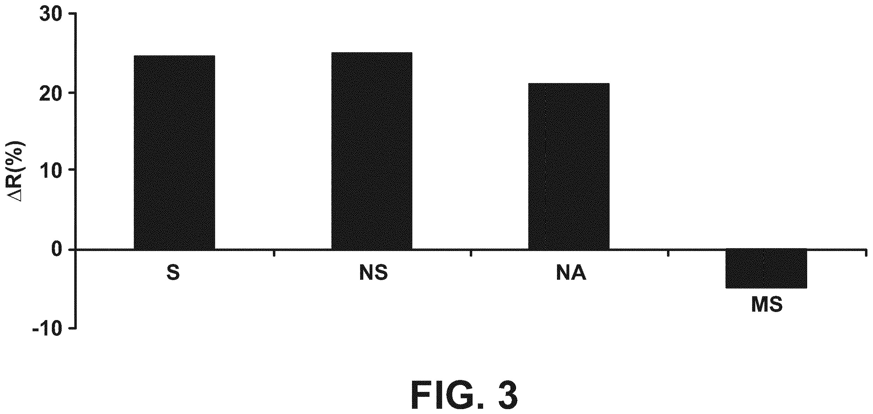

As shown in Figure 3 and explained in Example 4 the addition of doped C-H-S seeds according to the invention entails to achieve cement based materials, in particular cement pastes, with compressive properties as good as those achieved with the addition of NS particles, slightly better than those with NA additions and largely better than those with SF additions. Thus the process of the invention renders new cementitious C-H-S seeds obtained by a simple and industrially scalable process, which are at least as good as, or even better, than commonly used additives, and at a much lower price than other known methods do.

According to a particular embodiment the use of the C-S-H seeds of the invention is in a range between 0.05 % and 10% by weight in respect to the cement based material.

### EXAMPLES

### Example 1

### Effect of boron as doping element.

Two samples (both with Ca/(Si + doping element) =2) were prepared and compared by XRD. The first one, without doping agent and the second one with doping agent. The same batch of Fly Ashes and acetylene lime slurry suspension was employed in both cases.

The chemical composition of the FAs is shown in Table 1.

The acetylene lime slurry was a calcium-rich water suspension generated by the Acetylene industry. The suspension consisted of portlandite (Ca(OH)₂, containing a small amount of silica (<2 wt%) and some impurities such as Al, S (<0.7 wt%), Fe, Mn, and Sr (<0.1 wt%). The solid fraction in the suspension was 33% by weight.

For the undoped formulation the starting material corresponded to 107 g of FA and 283 g of acetylene lime slurry.

For the doped formulation the starting materials comprised 91 g of FA and 263 g of the acetylene lime slurry suspension mixed with 12.73 g of Borax (i.e. 7% by weight). In both cases water was added taking into account the amount present in the suspension until reach 1 liter. The Borax employed corresponds to Na₂B₄O₇•10H₂O (reagent grade, Sigma Aldrich).

Afterwards both formulations were subjected to the same hydrothermal treatment at 200ºC with endogenous pressure for 4 hours in an autoclave. The process was carried out under continuous stirring.

**Table 1: Chemical composition of the used FAs as determined by chemical analysis (CA) according to the Spanish standard UNE-EN 196-2 and by Fluorescence (FRX)**

| | LOI | SiO₂ | Al₂O₃ | Fe₂O₃ | MgO | K₂O | Na₂O | CaO | SO₃ |
|---|---|---|---|---|---|---|---|---|---|
| % CA | 5,86 | 50,34 | 24,9 | 4,83 | 1,81 | 1,58 | 0,55 | 5,89 | 0,29 |
| % FRX | 5,78 | 50,80 | 25,37 | 5,14 | 1,75 | 1,73 | 0,44 | 5,97 | |
| LOI = Loss on ignition | | | | | | | | | |

The XRD pattern of the products resulting from the mentioned hydrothermal treatment for both samples, the undoped one (upper panel) and the doped one (bottom panel) are shown in Fig. 1. As already mentioned, the undoped formulation (upper panel) does not give any signal at 2Theta = 8º while the signal is clearly present for the formulation doped with Borax. This peak is the so-called basal peak, and is a clear hallmark for the presence of tobermorite-like crystallites. Other important tobermorite peaks like those at 17º, 29º, 31º and 50º are likewise shown by arrows and confirm the pivotal role of the doping element in their appearance.

### Example 2

### Effect of phosphorus as doping element.

In particular, Fig 2 shows the XRD of the products resulting from a 6 hours long hydrothermal treatment of Fly Ashes and an acetylene lime slurry suspension at 200°C and endogenous pressure without doping agents (upper panel) and with a phosphorus containing doping agent: P₂O₅ (bottom panel).

The employed FAs and acetylene lime slurry were taken from the same batch as in the example 1, and their chemical composition is shown in Table 1. The doped sample analyzed in Figure 2 (bottom panel) was produced following the same process as described in example 1, and including 10% by weight of P₂O₅, instead of Borax. As done in Example 1 water was added in both cases until reach 1 liter. The P₂O₅ was a commercial one (reagent grade, Panreac).

The XRD pattern of the products resulting from the mentioned hydrothermal treatment for both samples, the undoped one (upper panel) and the doped one (bottom panel) are shown in Fig. 2. As already mentioned, the undoped formulation (upper panel) does not give any signal at 2Theta = 8º while the signal is clearly present for the formulation doped with P₂O₅. This peak is the so-called basal peak, and is clear hallmark for the presence of tobermorite-like crystallites. Other important tobermorite peaks like those at 17º, 29º, 31º and 50º are likewise shown by arrows and confirm the pivotal role of the doping element in their appearance.

The XRD patterns in examples 1 and 2 were obtained using a Phillips X'Pert Diffractometer (Eindhoven, the Netherlands) with Ni-filtered Cu Kα radiation used.

Examples 1 and 2 shown how the doping agents favor the appearance of phases which can be employed as templates for cementitious C-S-H growth,

### Example 3

This example illustrates the importance of the doping agent on the seeding capacity of the resulting C-S-H seeds, and how this affects the early mechanical properties of a cement based material being a cement paste.

To this end, two varieties of cement pastes were prepared in the same way. They were obtained from 52,5-R cements with a water to cement ration of 0.35 and with additions of a 6% by weight of C-H-S seeds of the invention. The only difference between the cement pastes was on the synthetic route employed to produce the C-H-S seeds, as one did not include any doping agent during their production, whereas the second one did include a doping agent. The used doped and undoped C-H-S seeds were those made in Example 1. After mixing, the cement pastes were cast into prism-shaped molds (1 cm x 1 cm x 6 cm), compacted by vibration and stored for one day in a climatic chamber at a temperature of 21±2 °C and >90% humidity. Afterwards they were demolded and kept for one day more in a saturated dissolution of Ca(OH)₂. Later the compressive strengths of the samples were measured using a Tester Ibertest Press. In Table 2 the early compressive strength of the two cement pastes are compared. As can be seen from Table 2, the use of doping elements in the hydrothermal treatment noticeably improves the seeding capacity of the C-H-S seeds of the invention.

**Table 2: Comparative examples**

| **Effect of doping agent** | **Compressive Strength (MPa)- 1day** |
|---|---|
| Nano-seeds produced without doping agents | 20.24 (±1) MPa |
| Nano-seeds produced with doping agent (Borax) | 27.99 (±2.3) MPa |

### Example 4

Comparative example: use of the C-H-S seeds of the invention as hardeners in comparison to other commonly employed SCMs.

The Figure 3 shows the increase in the compressive strength (with respect to the plain cement paste of reference) for cement pastes made with water-to-cement ratio of w/c=0.35 and 2 % by weight of additions and cured for 7 days. The cement corresponds to a 52.5-R Ordinary Portland Cement while the additions correspond to nanosilica particles (NS), nanoalumina particles (NA), Silica Fume or microsilica (MS), and C-H-S seeds of the invention (obtained according to Example 1).

After mixing, the cement pastes were cast into prism-shaped molds (1 cm x 1 cm x 6 cm), compacted by vibration and stored in a climatic chamber for 1 day at a temperature of 21±2 °C and >90% humidity. After, the samples were demolded and stored for 7 days in a saturated dissolution of Ca(OH)₂. Afterwards the compressive strengths of the samples were measured using a Tester Ibertest Press. As can be seen from Fig.3, the addition of doped C-H-S seeds entails to achieve cement pastes with compressive properties as good as those shown with NS particles, slightly better than those with NA additions and largely better than those with MS additions.

## Claims

1. A process for the manufacturing of C-S-H seeds comprising the following steps:
- (i) selecting one or more starting materials from industrial wastes and by- products comprising Ca and Si, wherein the industrial wastes and by-products are selected from the group consisting of fly ash, silica fume, ground granulated blast furnace slag, salt slag and acetylene lime slurry
- (ii) mixing said starting materials with at least one doping agent selected from the group of salts and oxides containing one or more of the doping elements selected from the group consisting of B, P and mixtures thereof , in such a proportion that the molar ratio Ca : (Si + doping element) in the mixture ranges between 0.5 and 2.5 and the molar ratio of doping element: silicon is in the range of 0.01 to 0.5;
- (iii) Combining the obtained mixture in (ii) with water so that the solid-water ratio by weight in the resulting mixture is equal to or larger than 0.2, and
- (iv) subjecting the said resulting mixture to hydrothermal treatment at a temperature comprised between 25 and 350 °C and a pressure that is endogenous or is kept constant between 0.1 MPa and 50 MPa.

2. Process according to claim 1 wherein the doping agent is borax, in any of its hydration states, or P₂O₅.

3. Process according to any one of claims 1 or 2, wherein the temperature of the hydrothermal treatment is 200 °C and the pressure is endogenous.

4. Process according to any one of claims 1 to 3, wherein the process is carried out under stirring.

5. A slurry containing C-S-H seeds obtainable by the process according to any of the previous claims.

6. Process according to any one of claims 1 to 4, further comprising the steps of cooling down, filtering the resulting slurry, drying at a temperature equal or below 125°C, and disagglomeration of the solid to obtain C-S-H seeds in form of a powder.

7. Powder containing C-S-H seeds obtained by the process according to claim 6.

8. Use of the slurry containing C-S-H seeds obtained by the process according to any one of claims 1 to 4, or of the powder containing C-S-H seeds according to claim 7 as hardening accelerator and seeding additive for concrete or other cement based materials

9. Use according to claim 8, wherein the slurry or the powder are in a range between 0.05 % and 10% by weight in respect to a cement based material.

10. A concrete or other cement based material comprising the slurry containing C-S-H seeds obtained by the process according to any one of claims 1 to 4, or the powder containing C-S-H seeds according to claim 7.

## Patentansprüche

1. Ein Verfahren zur Herstellung von C-S-H-Samen umfassend folgende Schritte:
- (i) auswählen von einem oder mehreren Ausgangsstoffen aus industriellen Abfällen und Nebenerzeugnissen umfassend Ca und Si, wobei die industriellen Abfälle und Nebenerzeugnisse ausgewählt aus der Gruppe bestehend aus Flugasche, Silicastaub, Hüttensand, Salzschlacke und Acetylenkalkschlamm sind
- (ii) mischen der Ausgangsstoffe mit mindestens einem Dotiermittel ausgewählt aus der Gruppe von Salzen und Oxiden enthaltend ein oder mehrere Dotierelemente ausgewählt aus der Gruppe bestehend aus B, P und Mischungen davon in einem Verhältnis, bei dem das Molverhältnis Ca : (Si + Dotierelement) in der Mischung bei zwischen 0,5 und 2,5 liegt und das Molverhältnis Dotierelement: Silizium im Bereich von 0,01 bis 0,5 liegt;
- (iii) kombinieren der in (ii) erhaltenen Mischung mit Wasser, so dass das Feststoff-Wasser-Gewichtsverhältnis in der daraus resultierenden Mischung 0,2 oder höher ist, und
- (iv) aussetzen der resultierenden Mischung hydrothermischer Behandlung bei einer Temperatur von zwischen 25 und 350 °C und einem Druck, der endogen ist oder bei zwischen 0,1 MPa und 50 MPa konstant gehalten wird.

2. Verfahren nach Anspruch 1, wobei das Dotiermittel Borax in einem seiner Hydratationszuständen oder P₂O₅ ist.

3. Verfahren nach einem der Ansprüche 1 oder 2, wobei die Temperatur der hydrothermischen Behandlung 200 °C beträgt und der Druck endogen ist.

4. Verfahren nach einem der Ansprüche 1 bis 3, wobei das Verfahren unter Rühren durchgeführt wird.

5. Eine Aufschlämmung enthaltend C-S-H Samen, die mittels des Verfahrens nach einem der vorhergehenden Ansprüche erhalten werden kann.

6. Verfahren nach einem der Ansprüche 1 bis 4, weiterhin umfassend die Schritte, in denen Abkühlung, Filtern der resultierenden Aufschlämmung, Trocknung bei einer Temperatur von 125 °C oder geringer und Desagglomeration des Feststoffes um C-S-H-Samen in Pulverform zu erhalten durchgeführt wird.

7. Pulver enthaltend C-S-H Samen, das mittels des Verfahrens nach Anspruch 6 erhalten werden kann.

8. Verwendung der Aufschlämmung enthaltend C-S-H-Samen, die mittels des Verfahrens nach einem der Ansprüche 1 bis 4 erhalten wird, oder des Pulvers enthaltend C-S-H-Samen nach Anspruch 7 als Härtungsbeschleuniger und Impfmittel für Beton oder andere zementbasierte Stoffe.

9. Verwendung nach Anspruch 8, wobei die Aufschlämmung bzw. das Pulver in einem Bereich von zwischen 0,05 Gew.-% und 10 Gew.-% bezüglich eines zementbasierten Stoffes vorhanden sind.

10. Ein Beton oder ein anderer zementbasierter Stoff umfassend die Aufschlämmung enthaltend C-S-H-Samen, die mittels des Verfahrens nach einem der Ansprüche 1 bis 4 erhalten wird, oder das Pulver enthaltend C-S-H-Samen nach Anspruch 7.

## Revendications

1. Un procédé de fabrication de germes de C-S-H comprenant les étapes suivantes:
- (i) choisir un ou plusieurs déchets industriels ou sous-produits comprenant du Ca et du Si come matériaux de départ, où les déchets industriels et les sous-produits sont choisis dans le groupe constitué de cendres volantes, fumée de silice, laitier granulé de haut fourneau moulu, scories salées et lait de chaux acétylénique
- (ii) mélanger lesdits matériaux de départ avec au moins un agent dopant choisi dans le groupe des sels et des oxydes contenant un ou plusieurs des éléments dopants choisis dans le groupe constitué de B, P et des mélanges de ceux-ci, dans une proportion telle que le rapport molaire Ca : (Si + élément dopant) dans le mélange est d'entre 0,5 et 2,5 et le rapport molaire de l'élément dopant : silicium est dans l'intervalle de 0,01 à 0,5 ;
- (iii) Combiner le mélange obtenu dans (ii) avec de l'eau de façon que le rapport en poids solide-eau dans le mélange résultant est égal ou supérieur à 0,2, et
- (iv) soumette ledit mélange résultant à un traitement hydrothermique à une température comprise entre 25 et 350 °C et à une pression qui est endogène ou qui est maintenue constante à une valeur d'entre 0,1 MPa et 50 MPa.

2. Procédé selon la revendication 1 dans lequel l'agent dopant est le borax, dans l'un quelconque de ses états d'hydratation, ou le P₂O₅.

3. Procédé selon l'une quelconque des revendications 1 ou 2, dans lequel la température du traitement hydrothermique est de 200 °C et la pression est endogène.

4. Procédé selon l'une quelconque des revendications 1 à 3, dans lequel le procédé est effectué sous agitation.

5. Une boue contenant des germes de C-S-H qui peut être obtenue par le procédé selon l'une quelconque des revendications précédentes.

6. Procédé selon l'une quelconque des revendications 1 à 4, comprenant en outre les étapes de refroidir, filtrer la boue résultante, sécher à une température égale ou inférieure à 125 °C, et désagglomérer le solide pour obtenir des germes de C-S-H sous forme de poudre.

7. Poudre contenant des germes de C-S-H obtenue par le procédé selon la revendication 6.

8. Utilisation de la boue contenant des germes de C-S-H obtenue par le procédé selon l'une quelconque des revendications 1 à 4, ou de la poudre contenant des germes de C-S-H selon la revendication 7 comme agent accélérateur de durcissement et comme additif de germination pour le béton ou d'autres matériaux à base de ciment.

9. Utilisation selon la revendication 8, dans laquelle la boue ou la poudre sont dans un intervalle d'entre 0,05 % et 10% en poids par rapport à un matériau à base de ciment.

10. Un béton ou un autre matériau à base de ciment comprenant la boue contenant des germes de C-S-H obtenue par le procédé selon l'une quelconque des revendications 1 à 4, ou la poudre contenant des germes de C-S-H selon la revendication 7.
